# EUROPEAN PATENT SPECIFICATION

(11) **EP 2 782 213 B1**
(45) Date of publication and mention of the grant of the patent: **13.03.2019**
(21) Application number: 13305356.1
(22) Date of filing: 22.03.2013
(51) Int. Cl.: H02J 13/00, B61L 29/30, G08G 1/095

(54) **Monitoring and control system and method for monitoring and controlling**
Überwachungs- und Steuerungssystem und Verfahren zur Überwachung und Steuerung
Système de surveillance et de commande et procédé de surveillance et de commande

(43) Date of publication of application: 24.09.2014
(73) Proprietor: ALSTOM Transport Technologies, 93400 Saint-Ouen (FR)
(72) Inventor: Papageorgiou, Achilles, 1480 Tubize (BE)
(74) Representative: Lavoix

(56) References cited:
- WO-A1-79/00631
- US-A- 3 648 233
- US-A- 4 135 145
- US-A- 5 248 967
- US-A- 5 327 123
- US-A- 5 387 909
- US-A1- 2011 121 664

## Description

The present invention concerns a monitoring and control system for monitoring and controlling a plurality of safety critical loads. Further, the present invention concerns a traffic light system, in particular for trains, comprising the above monitoring system. Finally, the present invention concerns a method for monitoring and controlling a plurality of safety critical loads.

US 5,327,123 concerns a traffic control system failure monitoring. The traffic control system is for use at a roadway intersection, the system including traffic control lights, a light flasher structure, and a plurality of load switches electrically coupled with the lights via relay structure to which the flasher structure is connected, the load switches having inputs, and a controller connected with the load switches for controlling normal operation of the lights and flashing of one or more of the lights by the flasher structure in the event of a system malfunction comprising a microprocessor operatively connected with the load switches, flasher, and relay structure to monitor the system for detecting a malfunction event, for recording the detected malfunction event, and for transmitting the malfunction detection to another location; and verification structure at the other locations for i) receiving the transmitted malfunction detection, ii) verifying the event, and iii) initiating malfunction corrective action; whereby the corrective action in the system may be initiated without removing control by the controller of the operation of the traffic control lights at the intersection.

Monitoring and control systems for signaling lights for rail roads comprise generally a master switch. An input side of the master switch is connected to a power supply, for example to a grid with the respective current. A plurality of signaling lights are connected in parallel to the output side of the master switch. Further, a plurality of load switches, each being associated to a specific signaling lamp, is electrically connected between the output of the master switch and the respective signaling lamp. Thus, the load switches can control the state (on or off) of the associated signaling lamp. The load switches and the master switch are controlled by a controller. In case of a failure, the controller is adapted to release the master switch.

It is necessary for each signaling lamp to control the voltage at the output of each load switch, so that a failure can be detected. For that purpose, the output terminals of each output of the load switches is connected respectively to a voltmeter. Each voltmeter includes an analogue to digital converter.

The voltmeters, the switches and the controller are arranged on a circuit board, which comprises a high voltage part and a low voltage part, which are separated by an isolation barrier. The controller is arranged on the low voltage part, whereas the switches and the voltmeters are arranged in the high voltage part.

The voltmeter needs usually a separate power supply, which is provided by an isolated power supply, which traverses the isolation barrier. Each voltmeter needs a separate power supply. Thus, for example, for eight signaling lamps, the monitoring and control system needs eight isolated transformers and eight voltmeters, which are isolated electrically from the controller. In other solutions, the output voltage was measured using opto-isolators. The opto-isolators have a high energy consumption. Further, the input threshold is fixed and there are no ways to measure the RMS (root mean square) voltage

However, such an arrangement needs a lot of place and the costs are relatively high.

Object of the invention is to provide a monitoring and control system which is more reliable at lower costs. In the light of above, a monitoring and control system for monitoring and controlling a plurality of safety critical loads according to independent claims 1 and 3 are provided.

The dependent claims set out particular embodiments of the invention.

Further, the present invention relates to a traffic light system, in particular for trains, comprising a monitoring system according to an embodiment disclosed herein.

Finally, the present invention relates to a method for monitoring and controlling a plurality of safety critical loads according to claim 11.

According to embodiments, the method can comprise one or more of the following features:
- measuring a third voltage value depending on the voltage between the first line and the second line;
- calculating the output voltage (Vout) provided to the safety critical load based on at least the first voltage value and the second voltage value, and, in particular the third voltage value; and/or
- the first output terminal and the second output terminal is selected by at least one multiplexer.

So that the manner in which the above recited features of the present invention can be understood in detail, a more particular description of the invention, briefly summarized above, may be read in reference to embodiments. The accompanying drawings relate embodiment of the invention and are described in the following:
- figure 1 shows schematically a monitoring and control system according to the invention;
- figure 2 shows schematically the electrical circuit of two load switches and the electrical connection of virtual voltmeters according to a first embodiment of the invention;
- figure 3 shows schematically the physical voltmeters and their connection to the controller according to the first embodiment;
- figure 4 shows schematically a portion of the electronic circuit including of a physical voltmeter according to the invention;
- figure 5 shows a flow chart of a method for monitoring and controlling a safety critical load;
- figure 6 shows schematically the calculation of an output voltage and load switch;
- figure 7 shows schematically the electrical circuit of a load switch and the electrical connection to virtual voltmeters according another embodiment of the invention; and
- figure 8 shows schematically a portion of the electronic circuit including the physical voltmeter for the embodiment shown in figure 7.

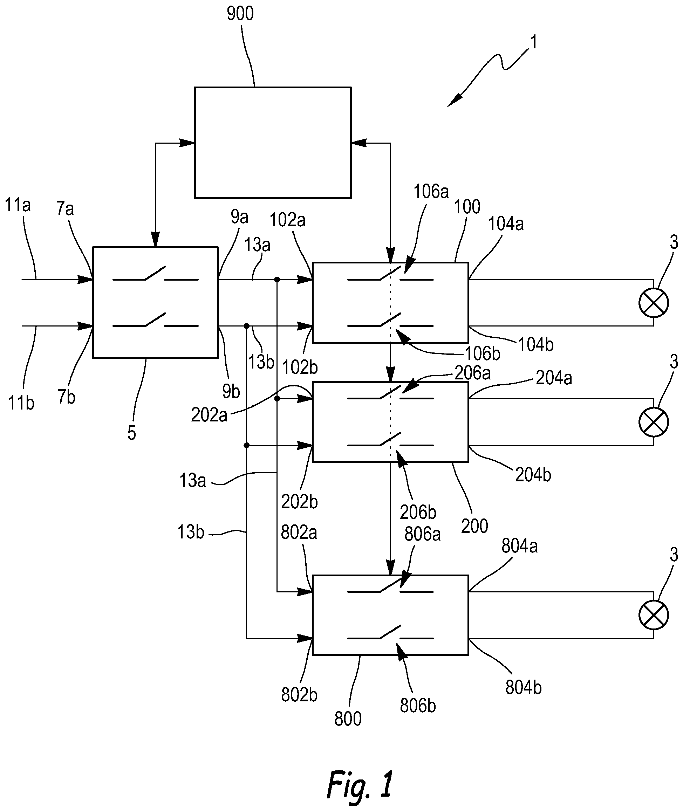

Figure 1 shows a monitoring and control system 1 according to an embodiment of the invention. The monitoring and control system 1 is provided for the control of safety critical loads 3, for example for signalling lamps or traffic lights, in particular for a railway. In such a system, it has to be controlled whether there is a defect in a switch or in the safety critical load. The monitoring and control system 1 detects whether a load is present, whether it is switched off or on or has a defect, whether the switch has a defect and, in particular how much energy it consumes. For example, such a control and monitoring system 1 may detect whether a lamp 3 exists, whether the lamp is switched on or off, whether it is has a defect, or whether the switch has defect that it activates the lamp even if the switch is turned off. This is accomplished, according to the invention, by permanently monitoring the output voltage of the switches.

In embodiment shown in figure 1, the monitoring and control system 1 comprises a master switch 5 having an input side with a first and a second terminal 7a, 7b and an output side with a first and second output terminal 9a, 9b. The first input terminal 7a of the master switch 5 is connected to a first input power line 11a and the second input terminal 7b is connected to a second input power line 11b, for example of a power grid.

The first and second input power lines 11a, 11b provides a current of more than 20 Volts, for example 110 V direct current (DC), or 230 volt alternating current (AC) to the master switch 5, because the safety critical loads 3 need such a current. In an embodiment, the power lines provide a voltage between 20V alternating current and 250V alternating current.

The output terminals 9a, 9b are connected respectively with a first line 13a and a second line 13b to a plurality of load switches 100, 200, ... , and 800. The first line 13a and the second line 13b form the power supply for the load switches. In the present embodiment, the monitoring and control system 1 includes eight load switches. However, in other embodiments, the monitoring and control system may comprise more or less load switches.

The plurality of load switches 100, 200, ... , 800 are connected electrically in parallel via a first line 13a and a second line 13b to the output side 9 of the master switch 5.

Each load switch 100, 200, ... , 800 is associated to a respective safety critical load 3, for example a signalling lamp. In another embodiment, one safety critical load may comprise more than one signalling lamp.

In further embodiments, the load switches 100, 200, ... , 800 may be replaced by another regulating device for regulating an output current and/or output voltage, for example a potentiometer or a switch combined with inductor to smooth a pulse width modulation signal . In such a case, the safety critical load 3 may be dimmed. In the following, the detailed description will relate to the load switches. However, the same principle for measuring the output voltage may also apply to another regulating device for regulating an output current and/or voltage.

The load switches 100, 200, ... , 800 comprise each two input terminals, namely a first input terminal 102a, 202a, ... , 802a and a second input terminal 102b, 202b, ... , 802b. The first input terminals 102a, 202a, ... , 802a are connected to the first line 13a and the second input terminals 102b, 202b, ... , 802b are connected to the second line 13b. Thus, the input voltage of the load switches 100, 200, ... , 800 corresponds to the output voltage between the first and second output terminals 9a, 9b of the master switch 5. The load switches 100, 200, ... , 800 have an output side with respectively a first output terminal 104a, 204a, ... , 804a and a second output terminal 104b, 204b, ... , 804b. The output terminals are connected respectively to the safety critical loads 3.

Further, the monitoring and control system 1 includes a controller 900 which is connected to the master switch 5 and each of the load switches 100, 200, ... , 800 to monitor individually the state of each of the safety critical loads 3, and to control the load switches 100, 200, ... , 800 and the master switch 5.

Each load switch 100, 200, ..., 800 comprises a first switch 106a, 206a, ..., 806a for switching a first electrical connection between the first input terminal 102a, 202a, ... , 802a and the first output terminal 104a, 204a, ..., 802a of the respective switch. Further, each load switch 100, 200 , ..., 800 comprises a second switch 106b, 206b, ..., 806b for switching a second electrical connection between the second input terminal 102b, 202b, ..., 802b and the second output terminal 104b, 204b, ..., 804b of the respective switch.

When both switches 106a, 106b, 206a, 206b, ..., 806a, 806b of a load switch 100, 200, ..., 800 are in the closed position, the respective safety critical load 3 is provided with a current. In case that only one or both of the switches 106a, 106b, 206a, 206b, ..., 806a, 806b is open, no current is provided to the safety critical load 3, so that the safety critical load is switched off.

In an embodiment, the first switch 106a, 206a, ..., 806a is a semi-conductor switch, for example a MOSFET switch. A semi-conductor switch permits a high frequency switching, for example for a blinking light. In an embodiment, which may be combined with other embodiments disclosed herein, the second switch 106b, 206b, ..., 806b is a relay switch. The relay switch permits switching high loads. In other embodiments, both switches, the first and the second switch 106a, 106b, 206a, 206b, ..., 806a, 806b, are relay switches.

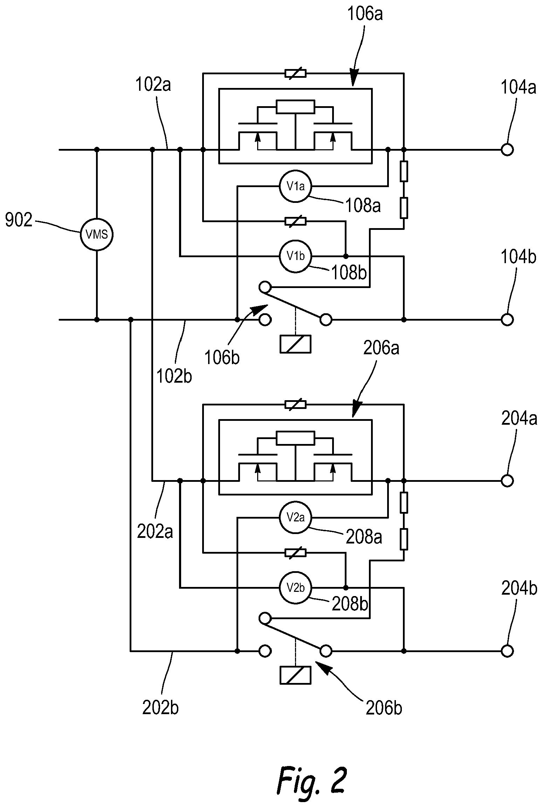

Figure 2 shows schematically two load switches 100, 200 in more detail, in particular a first load switch 100 and a second load switch 200. More specifically, figure 2 shows the electrical circuit of the load switches 100, 200 and the electrical connection of voltmeters in this circuit according to a first embodiment of the invention. The other load switches connected in parallel to the master switch 5 are not shown in figure 2. However, they have substantially the same electrical arrangement like the first and second load switches 100, 200. The same references in figure 2 relates to the same features as in figure 1.

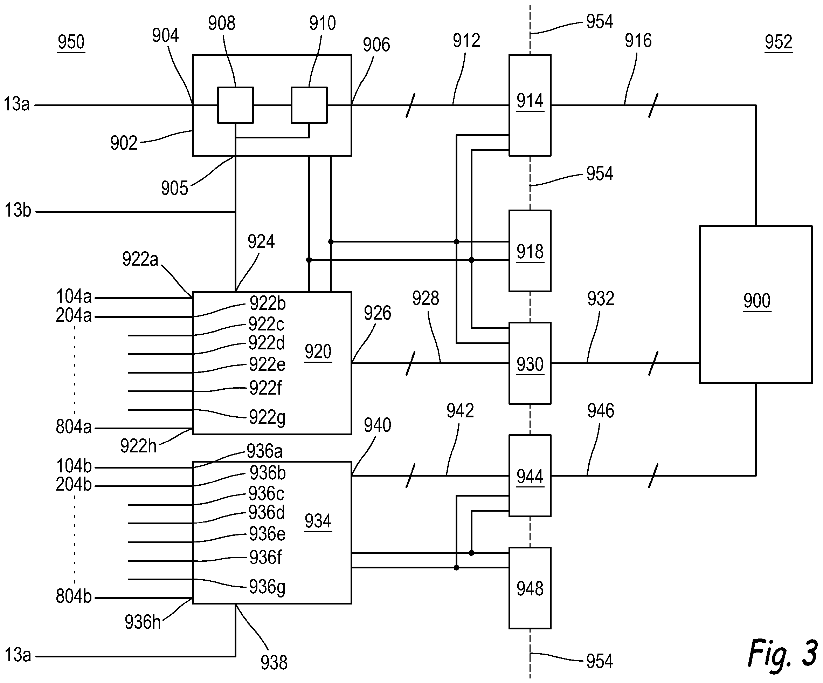

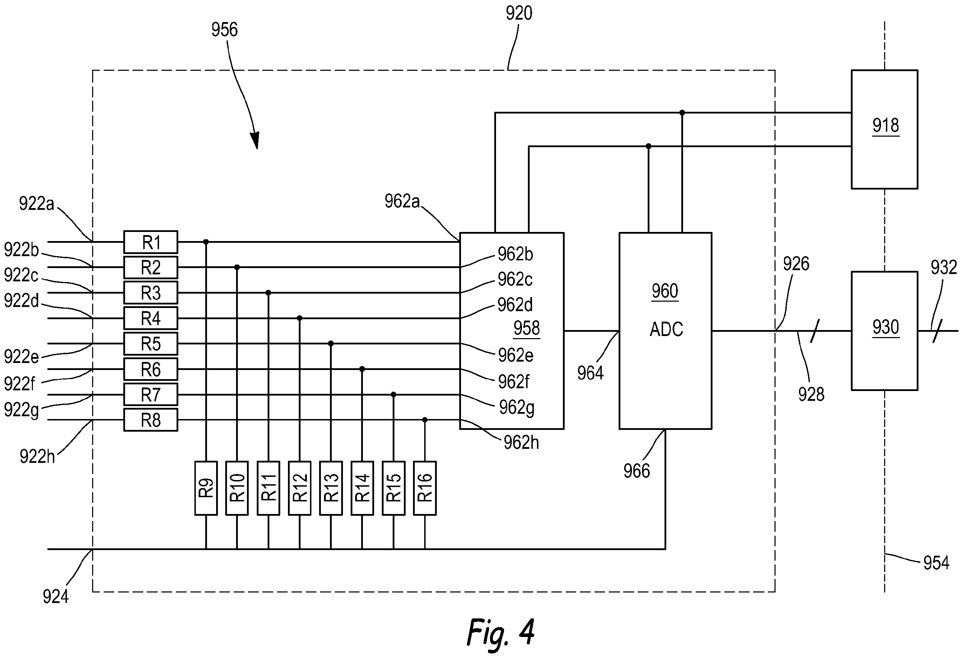

Figure 2 shows schematically the arrangement of a first voltmeter 902, second voltmeters 108a, 208a and third voltmeters 108b, 208b for determining the output voltage between the first output terminal 102a, 202a and the second output terminal 104b, 204b of each load switch 100, 200. The second and third voltmeters 108a, 208a, 108b, 208b shown in figure 2 are only shown for the purpose of explanation for the calculation of the output voltage and the connection of the voltmeters, because the second voltmeters 108a, 108b of the load switches 100, 200, ... 800 are formed by a single analogue to digital converter (ADC) and a multiplexer, and also the third voltmeters 108b, 208b of the load switches 100, 200, ... 800 are formed by a single analogue to digital converter (ADC) and a multiplexer, as it would be explained later. Thus, the second and third voltmeters 108a, 108b, 208a, 208b shown in figure 2 are virtual voltmeters. The physical voltmeter for determining the voltages are shown in figures 3 and 4.

The first voltmeter 902 is connected between the first line 13a and the second line 13b and adapted to measure the voltage difference VMS between the first line 13a and the second line 13b. This corresponds also to the input voltage of each of the load switches 100, 200, ... 800, in particular between their first input terminal 102a, 202a, ..., 802a and their second input terminal 102b, 202b, ..., 802b.

The second voltmeter 108a, 208a of each switch 100, 200, ... 800 is provided to measure a voltage V1a, V2a between the first output terminal 104a, 204a, ... 804a and the second input terminal 102b, 202b, ... 802b of the respective switch.

The third voltmeter 108b, 208b of each switch 100, 200, ... 800 is provided to measure the voltage V1b, V2b between the second output terminal 104b, 204b, ... 804b and the first input terminal 102a, 202a, ..., 802a of the respective switch.

In an embodiment, the voltmeters 108a, 108b, 208a, 208b, 902 measure the voltage between 20 volts and 300 volts alternating current or direct current, in particular between 100 volts and 250 volts alternating or direct current. Figure 3 shows schematically the physical voltmeters and their connection to the controller 900 according to an embodiment.

The first voltmeter 902 includes a first input terminal 904, a second input terminal 905, a digital output terminal 906, a voltage divider 908 connected to the input terminal 904, and an analogue digital convertor 910 connected in series to the voltage divider 908. The analogue digital converter 910 provides the converted signal to the digital output terminal 906. In other embodiments, the analogue digital converter 910 is directly connected to the input terminal 904, without a voltage divider 908. The voltage divider is provided to adapt the input voltage at the input terminal 904 to a voltage that can be treated by the analogue digital converter 910.

The first voltmeter 902 measures a voltage between the first input terminal 904 connected to the first line 13a and the second input terminal 905 connected to the second line 13b, which serves as a reference voltage value for the analogue digital converter 910 and the voltage divider 908.

The digital output value provided to digital output terminal 906 of the first voltmeter 902 depends on the voltage difference between the voltage between the first line 13a and the second line 13b and, in particular, on the voltage divider 908.

The first voltmeter 902 is adapted to provide digital output value via digital connection 912, a first isolator 914 and digital connection 916 to the controller 900. The first voltmeter 902 is powered by a first isolated power supply 918.

Further, figure 3 shows a second, physical voltmeter 920 corresponding to or performing the measurements of the second voltmeters 108a, 208a of the load switches 100, 200, ... , 800. The second voltmeter 920 includes eight first input terminals 922a, 922b, 922c, 922d, 922e, 922f, 922g, 922h, each connected respectively to the first output terminal 104a, 204a, ..., 804a of the load switches 100, 200, ... , 800. Further, the second voltmeter 920 includes a second input terminal 924 connected to a reference, here the second input terminal 102b, 202b, ..., 802b of the load switches 100, 200, ... , 800 corresponding to the voltage of the second line 13b.

The second voltmeter 920 has a digital output terminal 926. A digital output value provided to the digital output terminal 926 depend on the voltage between a selected first input terminal 922a - 922h and the second input terminal 924, provided with a reference voltage. In other words, the digital output value depend on the voltage between a selected first output terminal 104a, 204a, ..., 804a and the second input terminal 102b, 202b, ..., 802b corresponding to the voltage of the second line 13b.

The digital output terminal is connected via a digital connection 928 to a second isolator 930 and a further digital connection 932 to the controller 900, to provide the digital output value of the second voltmeter 920 to the controller 900. The first isolated power supply 918 also provides the power to the second voltmeter 920.

Additionally, figure 3 further shows the third, physical voltmeter 934 corresponding to or performing the voltage measurements for the third voltmeters 108b, 208b of the load switches 100, 200, ... , 800. The third voltmeter 934 includes eight first input terminals 936a, 936b, 936c, 936d, 936e, 936f, 936g, 936h, each connected respectively to the second output terminal s104b, 204b, ..., 804b of the load switches 100, 200, ... , 800. Further, the third voltmeter 934 includes a second input terminal 938 connected to a reference, here the first input terminal 102a, 202a, ..., 802a of the load switches 100, 200, ... , 800 corresponding to the voltage of the first line 13a.

The third voltmeter 934 has further a digital output terminal 940. A digital output value provided to the digital output terminal 940 depend on the voltage between a selected first input terminal 936a - 936h and the second input terminal 938, provided with a reference voltage. In other words, the digital output value depend on the voltage between a selected second output terminal 104b, 204b, ..., 804b and the first input terminal 102a, 202a, ..., 802a corresponding to the voltage of the first line 13a.

The digital output terminal 940 is connected via a digital connection 942 to a third isolator 944 and a further digital connection 946 to the controller 900, to provide the digital output value of the third voltmeter 934 to the controller 900. A second isolated power supply 948 provides the power to the third voltmeter 934.

The monitoring and control system 1 comprises generally a high voltage part 950 and a low voltage part 952 which are electrically separated from each other by an isolation barrier 954

The isolators 914, 930, 944 permit a communication via the isolation barrier 954 without a physical connection between the incoming and outcoming connectors of the isolators. The first isolated power supply 918 is adapted to provide power to the first voltmeter 902, the second voltmeter 920 and the parts of the first and second isolators 914, 930 provided on the high voltage side of the isolation barrier 954. The second isolated power supply 948 provides power to the third voltmeter 934 and the high voltage side of the third isolator 944 provided on the high voltage side of the isolation barrier 954. Usually, for each reference voltage of a voltmeter, a separate isolated power supply is needed. In the present embodiment, the three voltmeters need only two different reference voltages, so that only two isolated power supplies are needed. Instead of the first and the second isolators 914, 930, only one common isolator may be used. Thus, according to an embodiment of the invention, only three physical voltmeters 902, 920, 934 and two isolated power supplies 918, 948 and two digital isolators are used, in contrast to the solution of the prior art, where for each load switch an isolated power supply, an isolator and a voltmeter are needed. According to this embodiment, the number of components placed on the high voltage side 950 of the isolation barrier 954 is reduced, so that the number of outputs that the printed circuit board can handle may be increased, because the length of the isolation barrier 945 is limited by the printed circuit board size.

Figure 4 shows schematically a portion of the electronic circuit of the second, physical voltmeter 920 according to the invention. All second voltmeters 108a, 208a are realized using a single analogue digital convertor by multiplexing its input.

The voltmeter 920 includes a group of voltage divider 956, a multiplexer 958 and an analogue digital convertor 960. The first power supply 918 provides power to the multiplexer 958 and the analogue digital convertor 960.

The voltage of each first input terminals 922a to 922h are applied to respective inputs 962a, 962b, 962c, 962d, 962e, 962f, 962g, 962h of the multiplexer 958 via respectively a voltage divider formed by resistors R1 to R16. Thus, for example the voltage divider for the voltage applied to the first input terminal 922a is realized by the resistors R1 and R9. In other words, a first voltage divider is provided between the first input terminal 922a of the voltmeter and the first input 962a of the multiplexer, a second voltage divider is provided between the second input terminal 922b of the voltmeter and the second input 962b of the multiplexer and so on.

The reference voltage of each of the voltage dividers of the group of voltage dividers 956 is the voltage applied to the second input terminal 924 of the voltmeter 920, in other words the at the second input terminal 102b, 202b, ..., 802b of the load switches 100, 200, ..., 800, which corresponds to the voltage of the second line 13b.

The voltage dividers of the group of voltage dividers 956 are adapted to provide only a limited voltage to the analogue digital convertor 640, as the input of the analogue digital converter 640 and/or of the multiplexer 958 may only be adapted to treat a specific voltage range. Thus, the group of voltage dividers assures the compatibility between the voltage to be measured and an input of the analogue digital converter 640. In other embodiments, where the analogue digital converter 640 and multiplexer are adapted to treat the complete input voltage, it is not necessary to provide a group of voltage dividers 956.

In the present embodiment, the multiplexer 602 is adapted to select, depending on a command coming from the controller 900, one of its inputs 962a - 962h, and to provide the signal of the selected input to an input terminal 964 of the analogue digital converter 960.

The analogue digital convertor 960 converts the input voltage applied to his input terminal 964 with respect to reference voltage applied to a reference voltage input 966 to a digital value. The reference voltage input 966 is connected to the second input terminal 924 of the voltmeter 920. Thus, in the present case, the reference voltage at the reference voltage input corresponds to the voltage of the second input terminals 102b, 202b, ..., 802b of the load switches 100, 200, ..., 800 or the second line 13b.

In an embodiment, which may be combined with other embodiments disclosed herein, the multiplexer 602 and the electrical convertor 604 are provided in the same integrated circuit.

In another embodiment, the multiplexer associated to the analogue digital converter 960 or the voltmeter 920 may be arranged before a single voltage divider, in particular outside the voltmeter.

The internal circuits of the third voltmeter 934 correspond to the internal circuits of the second voltmeter 920. In other words, the third voltmeter includes a group of voltage dividers, a multiplexer and an analogue digital converter.

According to the embodiment shown in figures 3 and 4 it is possible to use only one analogue digital converter and a multiplexer to determine the voltages between the first output terminal and the second input terminal of each of the load switches 100, 200, ..., 800, as they share the same reference voltage. The same applies for determining the voltage between the second output terminal and the first input terminal of each of the load switches 100, 200, ..., 800.

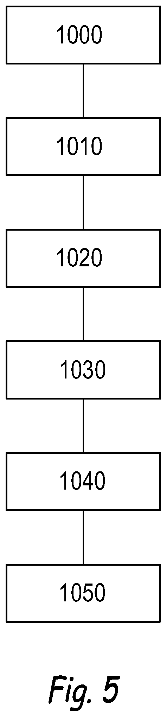

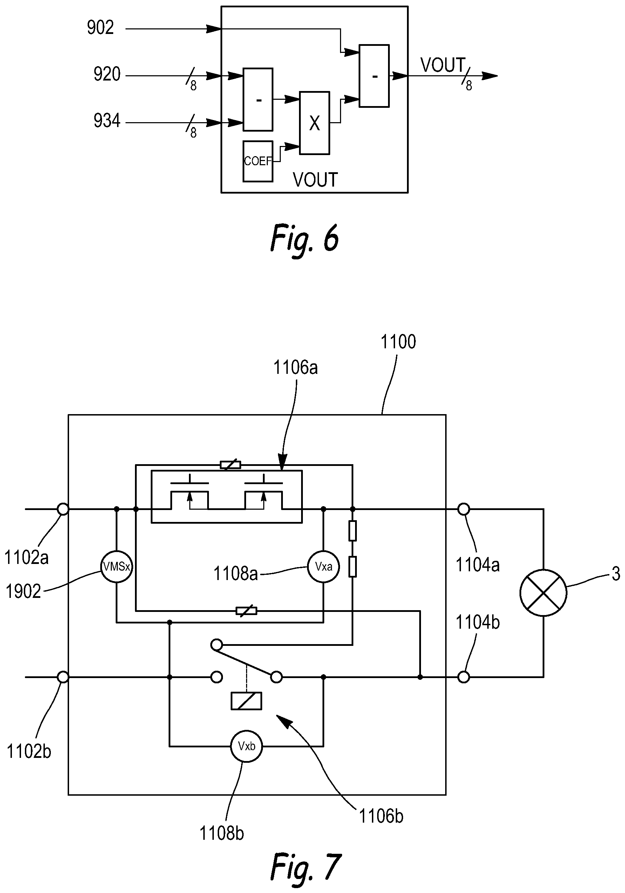

In the following, it will be explained how the monitoring and control system 1 works, in particular with reference to figure 5 and 6.

In particular, in cases the load switches 100, 200, ..., 800 are used to control whether a safety critical load 3 or lamp is working or lightened, the voltage between the first and second output terminals 104a, 104b, 204a, 204b, ... , 804a, 804b has to be determined.

In a first step 1000, the voltage between the first line 13a and the second line 13b is measured by the first voltmeter 902, which corresponds to the voltage difference between the respective first input terminals 102a, 202a, ..., 802a and second input terminals 102b, 202b, ..., 802b of the load switches 100, 200, ... 800. The voltmeter 902 transmits a value depending on the voltage difference VMS between the first and second line 13a, 13b via the isolator 914 to the controller 900.

In a further step 1010, which may be before, after or concurrently to the step 1000, the controller 900 selects the load switch 100, 200, ..., 800, for which the output voltage should be calculated, and emits a control signal to the multiplexers 958 of the second and the third voltmeters 920, 934.

Then, in step 1020, the multiplexers 958 of the second and the third voltmeter 920, 934 select the respective input terminals 962a to 962b corresponding to the first output terminal 104a, 204a, ..., 804a, and the second output terminal 104b, 204b, ..., 804b of the selected one of the load switches 100, 200, ..., 800.

For example, in case the output voltage of the first load switch 100 should be measured, the multiplexer 958 of the second voltmeter 920 selects its first input 962a being connected via the voltage divider to the first output terminal 102a of the first load switch 100, and the multiplexer of the second voltmeter 934 selects the first input terminal 936a of the second voltmeter being connected to the second output terminal 104b of the first load switch 100.

In a further step 1030, the analogue to digital converter 960 performs a conversion of the signal applied to its input terminal 964 to a digital value.

Then, in step 1040, the respective digital values depending on the voltages V1a, V1b are transferred via insulators 930, 944 to the controller 900.

The controller 900 performs in a further step 1050 the calculation of the output voltage, for example by the following equation: Vout = V1a - V1b - VMS, where Via corresponds to the voltage difference between the first output terminal 104a and the second input terminal 102b, V1b corresponds to the voltage difference between the second output terminal 104b and the first input terminal 102a, and VMS corresponds to the voltage difference between the first input terminal 102a and the second input terminal 102b. The digital output value of the first voltmeter 902 is proportional to VMS, the digital output value of the second voltmeter 920 is proportional to V1a, and the digital output value of the third voltmeter 934 is proportional V1b. The respective proportionality constant depends on the resistors selected for the voltage dividers.

In the controller, the calculation of the output voltage VOUT of the first load switch 100 is realized by the scheme shown in figure 7. After the subtraction of the result coming from the first voltmeters 108a and the second voltmeters 108b, a correction coefficient COEF is multiplied with the result, which depends on the proportionality constants or the ratio used in the voltage dividers 908, 956 in the voltmeters 902, 920, 934 and/or the range of the analogue to digital converters 910, 960. For example, if the voltage dividers of the first and second or third voltmeters used are different, a correction coefficient has to be applied to calculate the correct result. After the correction of the subtracted values coming from the second and third voltmeters 920, 934, a difference between this result and the value determined by the first voltmeter 902 is calculated to determine the output voltage of a load switch. In another embodiment, a further multiplication with a second correction coefficient is performed to determine the output voltage of a load switch.

Figure 7 shows another embodiment of a load switch 1100, in particular the electrical circuit of the load switch 1100 and the electrical connection to the voltmeters. In an embodiment, two or more load switches 1100 are used to switch safety critical loads.

Which embodiments of the load switches according to the embodiments of figure 2 or figure 7 are used, depends on the actual application and the number of safety critical loads to switch connected to a single power supply.

For example, in an embodiment, the monitoring and control system may comprise one or more load switches 1100 connected to a first power supply having a first voltage and one or more load switches 100, 200, ..., 800 connected to a second power supply having a second voltage. The first voltage may be 230V alternating current and a second voltage may be 110V direct current or vice versa. For example, an embodiment may comprise two load switches 1100 and six load switches 100, 200, ..., 800 according to Fig. 2.

In figure 7, the same features are designated with the same reference numbers as in figure 2 with 1000 added. The first input terminal 1102a is connected to the first line 13a and the second input terminal 1102b is connected to the second line 13b.

Figure 7 shows schematically the arrangement of a first voltmeter 1902, a second voltmeter 1108a and a third voltmeter 1108b for determining the output voltage between the first output terminal 1102a and the second output terminal 1104b.

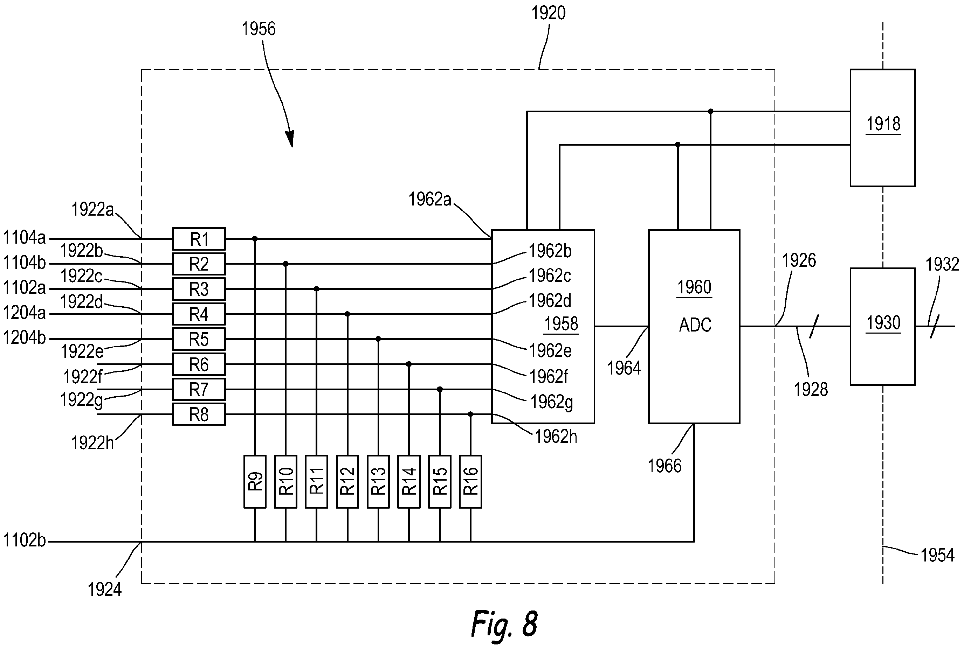

The first, second and third voltmeters 902, 1108a, 1108b shown in figure 2 are only shown for the purpose of explanation for the calculation of the output voltage and the connection of the voltmeters, because the first, second and third voltmeters 902, 1108a, 1108b of the load switches are formed by a single physical voltmeter formed by an analogue digital converter (ADC) and a multiplexer, as it will be explained later. Thus, the voltmeters shown in figure 2 are virtual voltmeters. The physical voltmeter for determining the respective voltages are shown in figures 8.

The first voltmeter 1902 is connected between the first input terminal 1102a and the second input terminal 1102b. The second voltmeter 1108a is electrically connected between the first output terminal 1104a and the second input terminal 1102b. The third voltmeter 1108b is arranged to measure a voltage difference between the second output terminal 1104b and the second input terminal 1102b.

The output voltage between the first and second output terminals 1104a, 1104b may be calculated by a difference between the voltage difference Vxa between the first output terminal 1104a and the second input terminal 802b, and the voltage difference Vxb between the second output terminal 1140b and the second input terminal 1102b. The voltage VMSx between the first input terminal 1102a and the second input terminal 1102b measured by the first voltmeter 1902 may be used for other purposes.

Figure 8 shows schematically a portion of the circuit of the monitoring and control system comprising a physical voltmeter 1920. The physical voltmeter 1920 realizes the first, second and third voltmeters 1108a, 1108b and 1902 in a single device by a multiplexer 1958 and one analogue digital convertor 1960. The same reference signs correspond to the same features as in figure 4 increased by 1000.

The voltmeter 1920 includes a group of voltage dividers 1956, the multiplexer 1958 and the analogue digital converter 1960.

The first output terminal 1104a, the second output terminal 1104b and the first input terminal 1102a of the first load switch 1100 are connected to the input terminals 1922a, 1922b, 1922c of the voltmeter 1920. Further, a first output terminal 1204a, a second output terminal 1204b of a second load switch, not shown, are connected to the input terminals 1922d, 1922e of the voltmeter 1920. The both load switches are connected and parallel to a power switch, so that the first input terminals 1102a, 1202a and the second input terminals 1102b, 1202b have respectively the same voltage.

The reference voltage for the group of voltage dividers 1956 and the analogue digital converter 1960 is provided to the second input terminal 1924 of the voltmeter 1920, which corresponds to the voltage at the second input terminal of the load switches 1102b or the second line 13b.

The multiplexer 1958 is adapted to select one of its input terminals 1962a - 1962h depending on a command provided by the controller 900. The analogue digital converter 1960 provides at its output a digital value of a value corresponding to a voltage of an input selected by the multiplexer 1958. The output of the analogue digital convertor 1960 is provided via first digital connection 1928 and a digital isolator 1930 and a second digital connection line 1932 to the controller 900. An isolated power supply 1918 provides power to the analogue digital converter 1960 and the multiplexer 1958.

In operation, when the output voltage between the first and second output terminals 1104a, 1104b of the load switch 1100 should be determined, the controller 900 instructs the multiplexer 1958 to select first input 1962a, then input 1962b and optionally input 1962c. In the meantime, the analogue digital converter 1960 performs the conversion of the voltages applied to its input terminal 1964.

Then, the controller 900 can calculate from the converted values the output voltage between the first output terminal 1104a and the second output terminal 1104b. This may be done by subtracting the converted value of the second input 1962b from the converted value of the first input 1962a and multiplying the result with a correction coefficient depending on the resistance values of the group of voltage dividers 1956.

Also in this case, the number of analogue digital convertor, isolated power supplies and isolators is reduced with respect to the prior art.

In an embodiment, which may be combined with other embodiments disclosed herein, instead of an analogue digital converter another type of measurement transducer may be used. Such a measurement transducer may for example convert the input voltage to a normed electrical signal, for example according to IEC 60381, representative of the input voltage with respect to a reference voltage.

In an embodiment, the resistors used in the load switches and/or the voltmeters are non wound resistors, in particular according to the European norm EN50129.

## Claims

1. Monitoring and control system (1) for monitoring and controlling a plurality of safety critical loads (3) comprising:
a power supply (13a, 13b), wherein the power supply comprises a first line (13a) and a second line (13b); and
a plurality of regulating devices (100, 200, 800; 1100) for regulating an output current and/or voltage, wherein each regulating device is adapted to be connected to a safety critical load via a first output terminal (104a, 204a, 804a; 1204a) and a second output terminal (104b, 204b, 804b; 1204b), wherein the plurality of regulating devices are connected in parallel to the power supply (13a, 13b); **characterized in that** the monitoring and control system further comprises:
a first measuring transducer (902) having an input terminal, wherein the measuring transducer converts, with respect to a first reference voltage input (905), a voltage applied to the input terminal to a first output signal, wherein the first reference voltage input is connected to one of the first line (13a) and the second line (13b) and the voltage provided to the input terminal depends on the voltage of the other one of the first line (13a) and the second line (13b),
a second measuring transducer (960) having an input terminal (964), wherein the measuring transducer converts, with respect to a second reference voltage input (966), a voltage applied to the input terminal to a second output signal, wherein the second reference voltage input is connected to the second line (13b), a third measuring transducer having an input terminal, wherein the measuring transducer converts, with respect to a third reference voltage input, a voltage applied to the input terminal to a third output signal, wherein the third reference voltage input is connected to the first line (13a);
at least one first multiplexer (958) associated to the second measuring transducer (960) for selecting one of the first output terminals (104a, 204a, 804a), wherein the selected first output terminal is connected to the input terminal (964) of the second measuring transducer, and
at least one second multiplexer associated to the third measuring transducer for selecting one of the second output terminals (104b, 204b, 804b), wherein the selected second output terminal is connected to the input terminal of the third measuring transducer..

2. Monitoring and control system according to claim 1, further comprising: a controller (900) connected to the first, second and third measuring transducer (902, 960), wherein the controller is adapted to derive from the first, second and third output signals provided by the first, second and third measuring transducers a value representing the voltage between the first output terminal (104a, 204a, 804a) and the second output terminal (104b, 204b, 804b) for at least one, in particular each, of the regulating devices (100, 200, 800).

3. Monitoring and control system (1) for monitoring and controlling a plurality of safety critical loads (3) comprising:
a power supply (13a, 13b), wherein the power supply comprises a first line (13a) and a second line (13b); and
a plurality of regulating devices (100, 200, 800; 1100) for regulating an output current and/or voltage, wherein each regulating device is adapted to be connected to a safety critical load via a first output terminal (104a, 204a, 804a; 1204a) and a second output terminal (104b, 204b, 804b; 1204b), wherein the plurality of regulating devices are connected in parallel to the power supply (13a, 13b); **characterized in that** the monitoring and control system further comprises:
a measuring transducer (1960) having an input terminal (1964), wherein the measuring transducer converts, with respect to a reference voltage input (1966), a voltage applied to the input terminal to an output signal, wherein the reference voltage input is connected to one of the first line (13a) and the second line (13b),
a multiplexer (1958) being associated to the measuring transducers (1960), wherein the multiplexer is adapted to select one of the first and second output terminals (104a, 104b, 204a, 204b, 804a, 804b; 1204a, 1204b), wherein the selected first or second output terminal is connected to the input terminal (1964) of the measuring transducer and
a controller (900), wherein the output of the measuring transducer (1960) is connected to an input of the controller, wherein the controller is adapted to derive from at least two output signals provided by the measuring transducer a value representing the voltage between the first output terminal (104a, 204a, 804a; 1204a) and the second output terminal (104b, 204b, 804b; 1204b) for at least one, in particular each, of the regulating devices (100, 200, 800; 1100).

4. Monitoring and control system according to claims 2 or 3, further comprising a first portion (950) being electrically isolated from a second portion (952) by an isolation barrier (954), wherein regulating devices (100, 200, 800; 1100), the multiplexer (908, 958; 1958) and the at least one measuring transducer (960, 1960) are arranged on the first portion and the controller (900) is arranged on the second portion.

5. Monitoring and control system according to claim 4, further comprising at least one isolator device (914, 930, 944; 1930) connected in series between the at least one measuring transducer (910, 960; 1960) and the controller (900), wherein the isolator device electrically isolates the measuring transducers from the controller, wherein, in particular, the number of isolator devices is equal or less than the number of measuring transducers.

6. Monitoring and control system according to claim 4 or 5, further comprising at least one isolated power supply (918, 948; 1930) for providing power to the multiplexer and/or the at least one measuring transducer (910, 960; 1960), wherein in particular the number of isolated power supplies is equal or less than the number of measuring transducers.

7. Monitoring and control system according to one of the preceding claims, wherein the voltage between the first line (13a) and the second line (13b) is between 20Volt and 250V, in particular between 100V and 230V.

8. Monitoring and control system according to one of the preceding claims, wherein at least one, in particular each, measuring transducer is an analogue digital converter (910, 960; 1960) for converting a voltage applied to the input terminal to a digital value with respect to the respective reference voltage input and/or wherein the regulating devices (100, 200, 800; 1100) are switches.

9. Monitoring and control system according to one of the preceding claims, wherein the safety critical loads (3) are signalling lamps and/or traffic lights, in particular for a railway.

10. Traffic light system, in particular for trains, comprising the monitoring and control system according to one of the preceding claims.

11. Method for monitoring and controlling a plurality of safety critical loads (3) with a monitoring and control system according to one of the claims 1 to 9, wherein the method comprises:
selecting a regulating devices (100, 200, 800; 1100) from the plurality of regulating devices;
measuring a first voltage value depending on the voltage (V1a, V2a, Vxa) between the first output terminal (104a, 204a, 804a, 1204a) of the selected regulating devices and the second line (13b),
measuring a second voltage value (V1b, V2b, Vxb) depending on the voltage between the second output terminal (104b, 204b, 804b; 1204b) of the selected regulating devices and one of the first line and the second line.

12. Method according to claim 11, further comprising:
measuring a third voltage value (VMS) depending on the voltage between the first line (13a) and the second line (13b).

13. Method according to claim 11 or 12, further comprising:
calculating the output voltage (Vout) provided to the safety critical load based on at least the first voltage value and the second voltage value, and, in particular the third voltage value.

14. Method according to one of the claims 11 to 13, wherein the first output terminal (104a, 204a, 804a, 1204a) and the second output terminal (104b, 204b, 804b; 1204b) is selected by at least one multiplexer (958; 1958).

## Patentansprüche

1. Überwachungs- und Steuersystem (1) zum Überwachen und Steuern einer Mehrzahl von sicherheitskritischen Lasten (3) aufweisend:
Eine Stromversorgung (13a, 13b), wobei die Stromversorgung eine erste Leitung (13a) und eine zweite Leitung (13b) aufweist; und
Eine Mehrzahl von Regelvorrichtungen (100, 200, 800; 1100) zum Regeln eines Ausgangsstroms und/oder einer Ausgangsspannung, wobei jede Regelvorrichtung eingerichtet ist, über einen ersten Ausgangsanschluss (104a, 204a, 804a; 1204a) und einen zweiten Ausgangsanschluss (104b, 204b, 804b; 1204b) mit einer sicherheitskritischen Last verbunden zu werden, wobei die Mehrzahl von Regelvorrichtungen parallel zu der Stromversorgung (13a, 13b) geschaltet ist;
dadurch charakterisiert, dass das Überwachungs- und Steuersystem ferner aufweist:
Einen ersten Messwandler (902) mit einem Eingangsanschluss, wobei der Messwandler in Bezug auf einen ersten Referenzspannungseingang (905) eine dem Eingangsanschluss zugeführte Spannung in ein erstes Ausgangssignal umwandelt, wobei der erste Referenzspannungseingang mit einer von der ersten Leitung (13a) und der zweiten Leitung (13b) verbunden ist und die dem Eingangsanschluss zugeführte Spannung von der Spannung von der anderen der ersten Leitung (13a) und der zweiten Leitung (13b) abhängt,
einen zweiten Messwandler (960) mit einem Eingangsanschluss (964), wobei der Messwandler in Bezug auf einen zweiten Referenzspannungseingang (966) eine dem Eingangsanschluss zugeführte Spannung in ein zweites Ausgangssignal umwandelt, wobei der zweite Referenzspannungseingang mit der zweiten Leitung (13b) verbunden ist,
einen dritten Messwandler mit einem Eingangsanschluss, wobei der Messwandler in Bezug auf einen dritten Referenzspannungseingang eine dem Eingangsanschluss zugeführte Spannung in ein drittes Ausgangssignal umwandelt, wobei der dritte Referenzspannungseingang mit der ersten Leitung (13a) verbunden ist;
mindestens einen ersten Multiplexer (958), der dem zweiten Messwandler (960) zugeordnet ist, zum Auswählen eines der ersten Ausgangsanschlüsse (104a, 204a, 804a), wobei der ausgewählte erste Ausgangsanschluss mit dem Eingangsanschluss (964) des zweiten Messwandlers verbunden wird, und
mindestens einen zweiter Multiplexer, der dem dritten Messwandler zugordnet ist, zum Auswählen eines der zweiten Ausgangsanschlüsse (104b, 204b, 804b), wobei der ausgewählte zweite Ausgangsanschluss mit dem Eingangsanschluss des dritten Messwandlers verbunden wird.

2. Überwachungs- und Steuersystem gemäß Anspruch 1, ferner aufweisend:
Eine Steuereinrichtung (900), die mit dem ersten, zweiten und dritten Messwandler (902, 960) verbunden ist, wobei die Steuereinrichtung eingerichtet ist, aus dem ersten, zweiten und dritten Ausgangssignal, die von dem ersten, zweiten und dritten Messwandler geliefert werden, einen Wert abzuleiten, der die Spannung zwischen dem ersten Ausgangsanschluss (104a, 204a, 804a) und dem zweiten Ausgangsanschluss (104b, 204b, 804b) für mindestens eine, insbesondere jede, der Regelvorrichtungen (100, 200, 800) repräsentiert.

3. Überwachungs- und Steuersystem (1) zum Überwachen und Steuern einer Mehrzahl von sicherheitskritischen Lasten (3) aufweisend:
Eine Stromversorgung (13a, 13b), wobei die Stromversorgung eine erste Leitung (13a) und eine zweite Leitung (13b) aufweist; und
Eine Mehrzahl von Regelvorrichtungen (100, 200, 800; 1100) zum Regeln eines Ausgangsstroms und/oder einer Ausgangsspannung, wobei jede Regelvorrichtung eingerichtet ist, mit über einen ersten Ausgangsanschluss (104a, 204a, 804a; 1204a) und einen zweiten Ausgangsanschluss (104b, 204b, 804b; 1204b) mit einer sicherheitskritischen Last verbunden zu werden, wobei die Mehrzahl von Regelvorrichtungen parallel zu der Stromversorgung (13a, 13b) geschaltet ist;
dadurch charakterisiert, dass das Überwachungs- und Steuersystem ferner aufweist:
Einen Messwandler (1960) mit einem Eingangsanschluss (1964), wobei der Messwandler in Bezug auf einen Referenzspannungseingang (1966) eine dem Eingangsanschluss zugeführte Spannung in ein Ausgangssignal umwandelt, wobei der Referenzspannungseingang mit einer von der ersten Leitung (13a) und der zweiten Leitung (13b) verbunden ist,
einen ersten Multiplexer (1958), der den Messwandlern (1960) zugeordnet ist, wobei der Messwandler eingerichtet ist, einen von dem ersten und zweiten Ausgangsanschluss (104a, 104b, 204a, 204b, 804a, 804b; 1204a, 1204b) auszuwählen, wobei der ausgewählte erste oder zweite Ausgangsanschluss mit dem Eingangsanschluss (1964) des Messwandlers verbunden wird und
eine Steuereinrichtung (900), wobei der Ausgang des Messwandlers (1960) mit einem Eingang der Steuereinrichtung verbunden wird, wobei die Steuereinrichtung eingerichtet ist, aus mindestens zwei Ausgangssignalen, die von dem Messwandler geliefert werden, einen Wert abzuleiten, der die Spannung zwischen dem ersten Ausgangsanschluss (104a, 204a, 804a; 1204a) und dem zweiten Ausgangsanschluss (104b, 204b, 804b; 1204b) für mindestens eine, insbesondere jede, der Regelvorrichtungen (100, 200, 800; 1100) repräsentiert.

4. Überwachungs- und Steuersystem gemäß Anspruch 2 oder 3, ferner aufweisend einen ersten Abschnitt (950), der von dem zweiten Abschnitt (952) durch eine Isolationsbarriere (954), wobei Regelvorrichtungen (100, 200, 800; 1100), der Multiplexer (908, 958; 1958) und der mindestens eine Messwandler (960, 1960) auf dem ersten Abschnitt angeordnet sind und die Steuereinrichtung (900) auf dem zweiten Abschnitt angeordnet ist.

5. Überwachungs- und Steuersystem gemäß Anspruch 4, ferner aufweisend mindestens eine Isolationsvorrichtung (914, 930, 944; 1930), die seriell zwischen den mindestens einen Messwandler (910, 960; 1960) und die Steuereinrichtung (900) geschaltet ist, wobei die Isolationsvorrichtung die Messwandler von der Steuereinrichtung elektrisch isoliert, wobei insbesondere die Anzahl von Isolationsvorrichtungen gleich ist der oder kleiner ist als die Anzahl von Messwandlern.

6. Überwachungs- und Steuersystem gemäß Anspruch 4 oder 5, ferner aufweisend mindestens eine isolierte Stromversorgung (918, 948; 1930) zum Liefern von Strom an den Multiplexer und/oder den mindestens einen Messwandler (910, 960; 1960) wobei insbesondere die Anzahl von isolierten Stromversorgungen gleich ist der oder kleiner ist als die Anzahl von Messwandlern.

7. Überwachungs- und Steuersystem gemäß einem der vorhergehenden Ansprüche, wobei die Spannung zwischen der ersten Leitung (13a) und der zweiten Leitung (13b) zwischen 20 Volt und 250V, insbesondere zwischen 100V und 230V, liegt.

8. Überwachungs- und Steuersystem gemäß einem der vorhergehenden Ansprüche, wobei mindestens einer, insbesondere jeder, der Messwandler ein Analog-DigitalWandler (910, 960; 1960) zum Umwandeln einer dem Eingangsanschluss zugeführten Spannung in einen digitalen Wert in Bezug auf den jeweiligen Referenzspannungseingang ist und/oder wobei die Regelvorrichtungen (100, 200, 800; 1100) Schalter sind.

9. Überwachungs- und Steuersystem gemäß einem der vorhergehenden Ansprüche, wobei die sicherheitskritischen Lasten (3) Signallampen und/oder Ampeln sind, insbesondere für eine Eisenbahnlinie.

10. Ampelsystem, insbesondere für Züge, aufweisend das Überwachungs- und Steuersystem gemäß einem der vorhergehenden Ansprüche.

11. Verfahren zum Überwachen und Steuern einer Mehrzahl von sicherheitskritischen Lasten (3) mit einem Überwachungs- und Steuersystem gemäß einem der Ansprüche 1 bis 9, wobei das Verfahren aufweist:
Auswählen einer Regelvorrichtung (100, 200, 800; 1100) aus der Mehrzahl von Regelvorrichtungen;
Messen eines ersten Spannungswerts abhängig von der Spannung (V1a, V2a, Vxa) zwischen dem ersten Ausgangsanschluss (104a, 204a, 804a, 1204a) der ausgewählten Regelvorrichtungen und der zweiten Leitung (13b),
Messen eines zweiten Spannungswerts (V1b, V2b, Vxb) abhängig von der Spannung zwischen dem zweiten Ausgangsanschluss (104b, 204b, 804b; 1204b) der ausgewählten Regelvorrichtungen und einer von der ersten Leitung und der zweiten Leitung.

12. Verfahren gemäß Anspruch 11, ferner aufweisend:
Messen eines dritten Spannungswerts (VMS) abhängig von der Spannung zwischen der ersten Leitung (13a) und der zweiten Leitung (13b).

13. Verfahren gemäß Anspruch 11 oder 12, ferner aufweisend:
Berechnen der Ausgangsspannung (Vout), die an die sicherheitskritische Last geliefert wird, basierend auf mindestens dem ersten Spannungswert und dem zweiten Spannungswert und insbesondere dem dritten Spannungswert.

14. Verfahren gemäß einem der Ansprüche 11 bis 13, wobei der erste Ausgangsanschluss (104a, 204a, 804a, 1204a) und der zweite Ausgangsanschluss (104b, 204b, 804b; 1204b) von mindestens einem Multiplexer (958; 1958) ausgewählt werden.

## Revendications

1. Système de surveillance et de commande (1) destiné à surveiller et commander une pluralité de charges critiques pour la sécurité (3) comprenant :
une alimentation électrique (13a, 13b), l'alimentation électrique comprenant une première ligne (13a) et une seconde ligne (13b) ; et
une pluralité de dispositifs de régulation (100, 200, 800 ; 1100) pour réguler un courant de sortie et/ou une tension de sortie, chaque dispositif de régulation étant apte à être connecté à une charge critique pour la sécurité par l'intermédiaire d'une première borne de sortie (104a, 204a, 804a ; 1204a) et d'une seconde borne de sortie (104b, 204b, 804b ; 1204b), la pluralité de dispositifs de régulation étant connectée en parallèle à l'alimentation électrique (13a, 13b) ; **caractérisé en ce que** le système de surveillance et de commande comprend en outre :
un premier transducteur de mesure (902) présentant une borne d'entrée, le transducteur de mesure convertissant, par rapport à une première entrée de tension de référence (905), une tension appliquée à la borne d'entrée en un premier signal de sortie, la première entrée de tension de référence étant connectée à une ligne parmi la première ligne (13a) et la seconde ligne (13b), et la tension fournie à la borne d'entrée dépendant de la tension de l'autre ligne parmi la première ligne (13a) et la seconde ligne (13b) ;
un deuxième transducteur de mesure (960) présentant une borne d'entrée (964), le transducteur de mesure convertissant, par rapport à une deuxième entrée de tension de référence (966), une tension appliquée à la borne d'entrée en un deuxième signal de sortie, la deuxième entrée de tension de référence étant connectée à la seconde ligne (13b) ;
un troisième transducteur de mesure présentant une borne d'entrée, le transducteur de mesure convertissant, par rapport à une troisième entrée de tension de référence, une tension appliquée à la borne d'entrée en un troisième signal de sortie, la troisième entrée de tension de référence étant connectée à la première ligne (13a) ;
au moins un premier multiplexeur (958) associé au deuxième transducteur de mesure (960) pour sélectionner l'une des premières bornes de sortie (104a, 204a, 804a), la première borne de sortie sélectionnée étant connectée à la borne d'entrée (964) du deuxième transducteur de mesure ; et
au moins un second multiplexeur associé au troisième transducteur de mesure pour sélectionner l'une des secondes bornes de sortie (104b, 204b, 804b), la seconde borne de sortie sélectionnée étant connectée à la borne d'entrée du troisième transducteur de mesure.

2. Système de surveillance et de commande selon la revendication 1, comprenant en outre :
un contrôleur (900) connecté aux premier, deuxième et troisième transducteurs de mesure (902, 960), le contrôleur étant apte à déduire des premier, deuxième et troisième signaux de sortie, fournis par les premier, deuxième et troisième transducteurs de mesure, une valeur représentant la tension entre la première borne de sortie (104a, 204a, 804a) et la seconde borne de sortie (104b, 204b, 804b) pour au moins un dispositif, en particulier pour chaque dispositif, parmi les dispositifs de régulation (100, 200, 800).

3. Système de surveillance et de commande (1) destiné à surveiller et commander une pluralité de charges critiques pour la sécurité (3) comprenant :
une alimentation électrique (13a, 13b), l'alimentation électrique comprenant une première ligne (13a) et une seconde ligne (13b) ; et
une pluralité de dispositifs de régulation (100, 200, 800 ; 1100) pour réguler un courant de sortie et/ou une tension de sortie, chaque dispositif de régulation étant apte à être connecté à une charge critique pour la sécurité par l'intermédiaire d'une première borne de sortie (104a, 204a, 804a ; 1204a) et d'une seconde borne de sortie (104b, 204b, 804b ; 1204b), la pluralité de dispositifs de régulation étant connectée en parallèle à l'alimentation électrique (13a, 13b) ; **caractérisé en ce que** le système de surveillance et de commande comprend en outre :
un transducteur de mesure (1960) présentant une borne d'entrée (1964), le transducteur de mesure convertissant, par rapport à une entrée de tension de référence (1966), une tension appliquée à la borne d'entrée, en un signal de sortie, l'entrée de tension de référence étant connectée à l'une parmi la première ligne (13a) et la seconde ligne (13b) ;
un multiplexeur (1958) qui est associé aux transducteurs de mesure (1960), le multiplexeur étant apte à sélectionner l'une des première et seconde bornes de sortie (104a, 104b, 204a, 204b, 804a, 804b ; 1204a, 1204b), la première ou la seconde borne de sortie sélectionnée étant connectée à la borne d'entrée (1964) du transducteur de mesure ; et
un contrôleur (900), la sortie du transducteur de mesure (1960) étant connectée à une entrée du contrôleur, le contrôleur étant apte à déduire, d'au moins deux signaux de sortie fournis par le transducteur de mesure, une valeur représentant la tension entre la première borne de sortie (104a, 204a, 804a ; 1204a) et la seconde borne de sortie (104b, 204b, 804b ; 1204b), pour au moins un dispositif, en particulier pour chaque dispositif, des dispositifs de régulation (100, 200, 800 ; 1100).

4. Système de surveillance et de commande selon la revendication 2 ou 3, comprenant en outre une première partie (950) qui est isolée électriquement d'une seconde partie (952) par une barrière d'isolation (954), dans lequel des dispositifs de régulation (100, 200, 800 ; 1100), le multiplexeur (908, 958 ; 1958) et ledit au moins un transducteur de mesure (960, 1960) sont agencés dans la première partie, et le contrôleur (900) est agencé dans la seconde partie.

5. Système de surveillance et de commande selon la revendication 4, comprenant en outre au moins un dispositif isolateur (914, 930, 944 ; 1930) connecté en série entre ledit au moins un transducteur de mesure (910, 960 ; 1960) et le contrôleur (900), le dispositif isolateur isolant électriquement les transducteurs de mesure du contrôleur, le nombre de dispositifs isolateurs étant, en particulier, inférieur ou égal au nombre de transducteurs de mesure.

6. Système de surveillance et de commande selon la revendication 4 ou 5, comprenant en outre au moins une alimentation électrique isolée (918, 948 ; 1930) pour alimenter le multiplexeur et/ou ledit au moins un transducteur de mesure (910, 960 ; 1960), le nombre d'alimentations électriques isolées étant, en particulier, inférieur ou égal au nombre de transducteurs de mesure.

7. Système de surveillance et de commande selon l'une quelconque des revendications précédentes, dans lequel la tension entre la première ligne (13a) et la seconde ligne (13b) est comprise entre 20 V et 250 V, en particulier entre 100 V et 230 V.

8. Système de surveillance et de commande selon l'une quelconque des revendications précédentes, dans lequel au moins un transducteur de mesure, en particulier chaque transducteur de mesure, est un convertisseur analogique-numérique (910, 960 ; 1960) destiné à convertir une tension appliquée à la borne d'entrée en une valeur numérique par rapport à l'entrée de tension de référence respective, et/ou dans lequel les dispositifs de régulation (100, 200, 800 ; 1100) sont des commutateurs.

9. Système de surveillance et de commande selon l'une quelconque des revendications précédentes, dans lequel les charges critiques pour la sécurité (3) sont des lampes de signalisation et/ou des feux de circulation, en particulier pour une voie ferrée.

10. Système de feux de circulation, en particulier destiné à des trains, comprenant le système de surveillance et de commande selon l'une quelconque des revendications précédentes.

11. Procédé de surveillance et de commande d'une pluralité de charges critiques pour la sécurité (3) avec un système de surveillance et de commande selon l'une quelconque des revendications 1 à 9, le procédé comprenant les étapes ci-dessous consistant à :
sélectionner un dispositif de régulation (100, 200, 800 ; 1100) parmi la pluralité de dispositifs de régulation ;
mesurer une première valeur de tension en fonction de la tension (V1a, V2a, Vxa) entre la première borne de sortie (104a, 204a, 804a ; 1204a) des dispositifs de régulation sélectionnés et la seconde ligne (13b) ;
mesurer une deuxième valeur de tension (V1b, V2b, Vxb) en fonction de la tension entre la seconde borne de sortie (104b, 204b, 804b ; 1204b) des dispositifs de régulation sélectionnés et l'une parmi la première ligne et la seconde ligne.

12. Procédé selon la revendication 11, comprenant en outre l'étape ci-dessous consistant à :
mesurer une troisième valeur de tension (VMS) en fonction de la tension entre la première ligne (13a) et la seconde ligne (13b).

13. Procédé selon la revendication 11 ou 12, comprenant en outre l'étape ci-dessous consistant à :
calculer la tension de sortie (Vout) fournie à la charge critique pour la sécurité sur la base au moins de la première valeur de tension et de la deuxième valeur de tension, et en particulier de la troisième valeur de tension.

14. Procédé selon l'une quelconque des revendications 11 à 13, dans lequel la première borne de sortie (104a, 204a, 804a ; 1204a) et la seconde borne de sortie (104b, 204b, 804b ; 1204b) sont sélectionnées par au moins un multiplexeur (958 ; 1958).
